# EUROPÄISCHE PATENTSCHRIFT

(11) **EP 1 127 780 B1**
(45) Veröffentlichungstag und Bekanntmachung des Hinweises auf die Patenterteilung: **03.09.2003**
(21) Anmeldenummer: 01102889.1
(22) Anmeldetag: 15.02.2001
(51) Int. Cl.: B62D 61/12, B60C 23/10

(54) **Mehrachsige Nutzfahrzeuge mit Liftachse**
Multiple axle utility vehicle with lifting axle
Véhicule utilitaire à plusieurs essieux avec essieu relevable

(30) Priorität: 25.02.2000 DE 10008938
(43) Veröffentlichungstag der Anmeldung: 29.08.2001
(73) Patentinhaber: MAN Nutzfahrzeuge Aktiengesellschaft, 80976 München (DE)
(72) Erfinder: Übelacker, Andreas, Dipl.-Ing., 82282 Unterschweinbach (DE)

(56) Entgegenhaltungen:
- DE-A- 3 407 193

## Beschreibung

Der Erfindung liegt ein mehrachsiges Nutzfahrzeug mit Aufbauten und mit wenigstens einer anhebbaren Achse gemäß dem Oberbegriff des Anspruches 1 zu Grunde.

Bei Nutzfahrzeugen ist es oft vorteilhaft, für Leerfahrt oder Teillast liftbare Vor- oder Nachlaufachsen vorzusehen, um diese Bedarfsweise anheben zu können. Somit kann ein geringerer Reifenverschleiß sowie ein reduzierter Rollwiderstand und damit eine Treibstoffeinsparung erzielt werden.

Beispielsweise bei Volumentransportern besteht aufgrund einer gesetzlich begrenzten Fahrzeuggesamthöhe häufig das Problem, dass die Vor- oder Nachlaufachse bei diesen Fahrzeugen maximal nur um ein bestimmtes Maß eines zwischen einer Reifenoberkante und einer Aufbauunterkante sich ergebenden Freiganges (f) angehoben werden kann. Da sich die am Boden verbleibenden Reifen, beispielsweise jene einer Triebachse, infolge des Fahrzeuggewichtes um eine Reifeneinfederung (e) abplatten, reduziert sich der durch die Anhebung der Reifen unterhalb derselben nur theoretisch als Betrag des Freiganges (f) zur Verfügung stehende Abstand zum Fahrbahnboden, und zwar um den Betrag dieser Reifeneinfederung (e), so dass nur ein reduzierter Abstand (h₁ = f-e) zwischen den angehobenen Reifen und dem Fahrbahnboden erzielbar ist. Dieses Maß des reduzierten Abstandes (h₁) kann sich in der Praxis als zu gering erweisen, da bei einer vollen Durchfederung der Triebachse die Reifen der gelifteten Achse im ungünstigsten Fall auf dem Fahrbahnboden aufsetzen, was zu erheblichem Verschleiß an diesen Reifen führen kann. Somit kann der Sinn einer Liftachse in Frage gestellt sein.

Aus der DE 39 29 788 C2 ist ein Lastkraftwagen mit einem Doppelachsaggregat bekannt, welches an pendelnd aufgehängten Blattfedern angeordnet ist. Dabei ist eine Achse des Doppelachsaggregates als Treibachse antreibbar. Die zweite Achse des Doppelachsaggregates ist als Liftachse über Luftfederbälge anhebbar.

Es ist Aufgabe der Erfindung, eine Lifteinrichtung für liftbare Achsen von Nutzfahrzeugen zu schaffen, die trotz gegebenenfalls beschränktem Anhebweg einer Anhebbahren Achse einen ausreichenden Sicherheitsabstand ihrer mitangehobenen Reifen bezüglich eines Fahrbahnbodens ermöglicht.

Diese Aufgabe wird erfindungsgemäß durch die Merkmale des Anspruches 1 gelöst.

Infolge des erfindungsgemäß kombinierten Zusammenwirkens einer Reifendruckregelanlage mit einer Achsliftanlage ist zusätzlich zu einer Anhebbarkeit von mit einer liftbaren Achse mitanhebbarer Reifen deren Druckluftentleerbarkeit zumindest teilweise realisierbar. Dadurch ist die geliftete Achse in vorteilhafter Weise mit ihren mitangehobenen Reifen um einen zusätzlichen Liftweg mittelbar oder unmittelbar gegen eine Unterseite eines Fahrzeugaufbaus drückbar. Somit sind die mitangehobenen Reifen der gelifteten Achse um einen wirksamen Sicherheitsabstand aus einem möglichen Kontaktbereich mit der Fahrbahnoberfläche bringbar, wodurch der Verschleiß an diesen Reifen erheblich gemindert werden kann. In vorteilhafter Weise sind die angehobenen, gegebenenfalls komplett druckluftentleerten Reifen im Bedarfsfall infolge des kombinierten Zusammenwirkens von Achsliftanlage und Reifendurckregelanlage mit Druckluft aus einer Druckluftanlage vollständig wiederbefüllbar und durch Absenkung auf den Fahrbahnboden in ihre ursprüngliche Wirkstellung bringbar.

Gemäß einer weiteren Ausgestaltung der Erfindung können die anhebbaren Reifen der wenigstens einen liftbaren Achse um den Betrag einer Seitenwandhöhe der Reifen als zusätzlichem Liftweg anhebbar sein. Somit ist ein größtmöglicher Anhebweg der Reifen ausgeschöpft.

Gemäß einer weiteren Ausgestaltung der Erfindung können die Komponenten der Reifendruckregelanlage derart mit den Komponenten der Achsliftanlage zusammenwirken, dass spätestens zu Beginn des Liftvorganges der anhebbaren Achse die dazugehörigen Reifen zunächst entlüftet, anschließend die Achse geliftet und abschließend die Reifen gegen eine Unterseite der Aufbauten gedrückt sind. Beim Vorgang des Wiederabsetzens der Reifen auf den Fahrbahnboden kann in umgekehrter Abfolge verfahren werden.

Alternativ hierzu können die Komponenten der Reifendruckregelanlage derart mit den Komponenten der Achsliftanlage zusammenwirken, dass die Entlüftung der mitanhebbaren Reifen vor, während oder nach dem Liftvorgang der anhebbaren Achse erfolgt. Die bereits während des Liftvorganges einsetzende Entlüftung der Reifen kann bei deren mittelbaren oder unmittelbaren Anpressung gegen die Unterseite der Aufbauten fortgesetzt werden.

Gemäß einer weiteren Ausgestaltung der Erfindung können für die Reifendruckregelanlage und die Achsliftanlage Ventile große Querschnitte vorgesehen sein. Somit ist ein schnelleres Anheben und Anpressen der Reifen ermöglicht.

Gemäß einer weiteren Ausgestaltung der Erfindung kann die Reifendruckregelanlage und die Achsliftanlage eine gemeinsame Druckluftanlage aufweisen, welche über eine gemeinsame Steuer- und Regelungseinrichtung verfügt. Alternativ hierzu können für die Reifendruckregelanlage und die Achsliftanlage separate Druckluftanlagen und Steuer- und Regelungseinrichtungen vorgesehen sein.

Weitere vorteilhafte Ausgestaltungen und zweckmäßige Fortbildungen der erfindungsgemäßen Liftachse sind aus den nachstehenden Beispielsbeschreibungen an Hand der Zeichnung näher entnehmbar.

In der Zeichnung zeigen:
- Fig. 1: schematisch und in ausschnittsweiser Seitenansicht ein Nutzfahrzeug mit sowohl einer angetriebenen als auch einer angehobenen Achse,
- Fig. 2: in Seitenansicht eine angehobene Achse mit Luftfederbalg und
- Fig. 3: schematisch ein Blockschaltbild der für die Anhebung der Achse im wesentlichen notwendigen Komponenten.

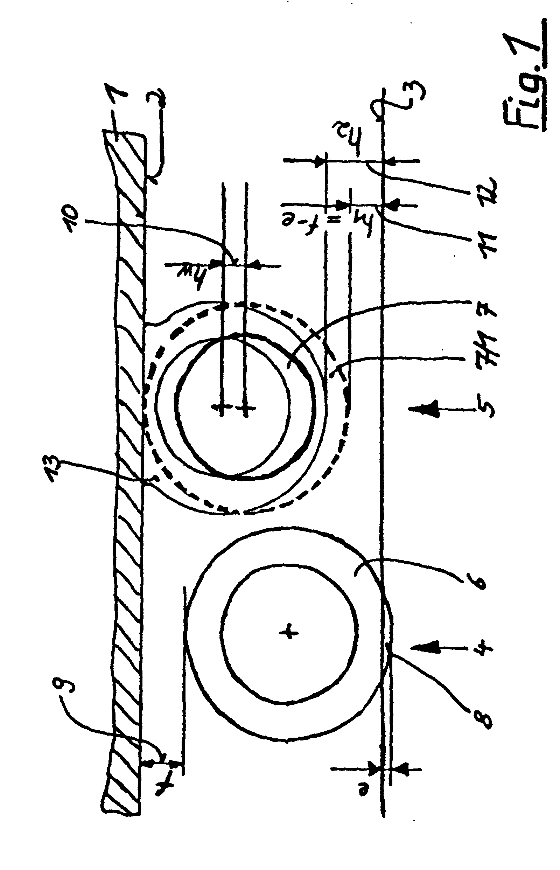

In Fig. 1 ist schematisch und in ausschnittsweiser Seitenansicht ein Nutzfahrzeug mit sowohl einer angetriebenen Achse 4 als auch einer angehobenen Achse 5 gezeigt.

Die angetriebene Achse 4 stützt sich über ihre Reifen 6 gegenüber einem Fahrbahnboden 3 dergestalt ab, dass eine untere Abplattung - die Reifeneinfederung (e) - 8 am Reifen 6 entsteht. Zwischen einer Reifenoberkante des Reifens 6 und einer Unterseite 2 nutzfahrzeugtypischer Aufbauten 1 besteht ein Abstand, der Freigang (f) 9 genannt wird. Theoretisch ist um dessen Betrag ein anhebbarer Reifen 7/1 nach bisherigem Stand der Technik vom Fahrbahnboden 3 abhebbar und gegen die Unterseite 2 der Aufbauten 1 anlegbar.

Wie die strichlierte Darstellung dieses Reifens 7/1 zeigt, ist dieser - mit Druckluft gefüllt - nur um einen Normalabstand (h₁) 11 von seiner Reifenunterseite bis zum Fahrbahnboden 3 beabstandbar. Dieser Normalabstand (h₁) ergibt sich aus dem Freigang (f) 9 unter Reduzierung der Distanz der Reifeneinfederung (e) 8, oder formelmäßig ausgedrückt: (h₁ = f - e).

Des weiteren ist ein durch das kombinierte Zusammenwirken einer hier nicht näher gezeigten Achsliftanlage mit einer Reifendruckregelanlage ein Reifen 7 einer anhebbaren Achse 5 angehoben und drucklos gemacht, sowie derart gegen eine Unterseite 2 der Aufbauten 1 gepresst, dass sich ein gegenüber dem Normalabstand (h₁) 11 erhöhter Maximalabstand (h₂) zwischen einer Reifenunterseite und dem Fahrbahnboden 3 ergibt. Der größer als der Freigang (f) 9 ausfallende Maximalabstand (h₂) 12 ergibt sich aus dem Normalabstand (h1) 11 zuzüglich einer Reifenseitenwandhöhe (h_{w}) 10, oder formelmäßig ausgedrückt: (h₂ = h₁ + h_{w}).

Infolge der Maximierung des Abstandes zwischen einer Reifenunterseite und dem Fahrbahnboden 3 auf einen maximalisierten Anhebweg - dem Maximalabstand (h₂) 12 - kann somit ein Aufsetzen des mitangehobenen Reifens 7 der angehobenen Achse 5 - hier durch eine Nachlaufachse 5 realisiert - unter praxisrelevanten Fahrbedingungen wirksam verhindert werden.

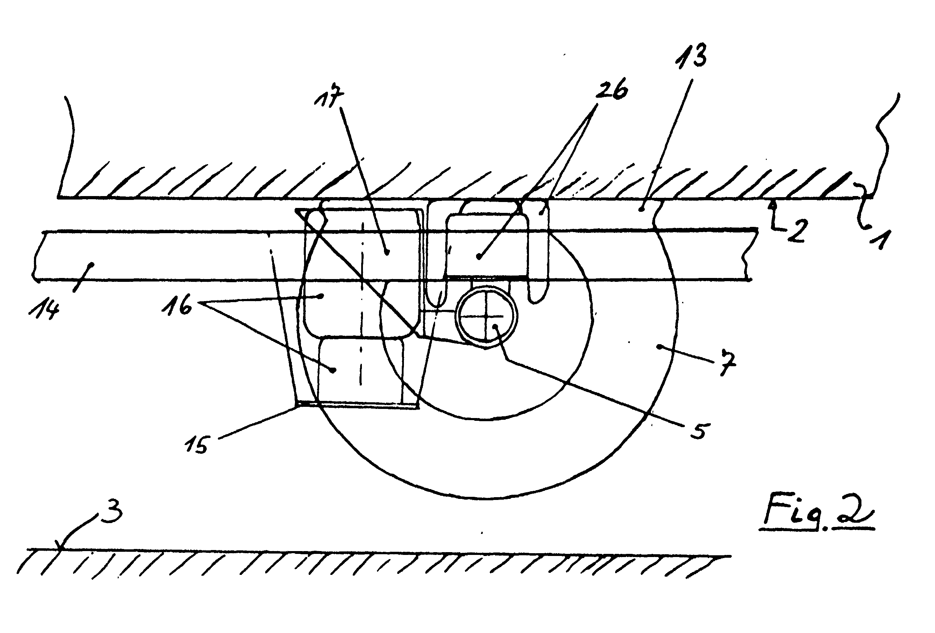

In Fig. 2 ist in Seitenansicht eine angehobene Achse 7 eines Nutzfahrzeuges gezeigt. Die angehobene Achse 5 ist mittels eines Luftfederbalges 16 einer hier nicht näher ausgeführten Achsliftanlage unmittelbar bis unter einen Rahmenlängsträger 14 angehoben. Der Luftfederbalg 16 ist dabei unterseitig von einem am Rahmenlängsträger 14 angeordneten Querträger 15 abgestützt. Oberseitig stützt sich der Luftfederbalg 16 gegenüber einem mit der Achse 5 fest verbundenen Halter 17 ab. Der zusammen mit der Achse 5 angehobene Reifen 7 ist in dem hier gezeigten Beispiel bereits drucklos und gegen eine Unterseite 2 von auf dem Rahmenlängsträger 14 befindlichen Aufbauten 1 gedrückt, so dass sich am Reifen 7 eine obere Abplattung 13 ergibt.

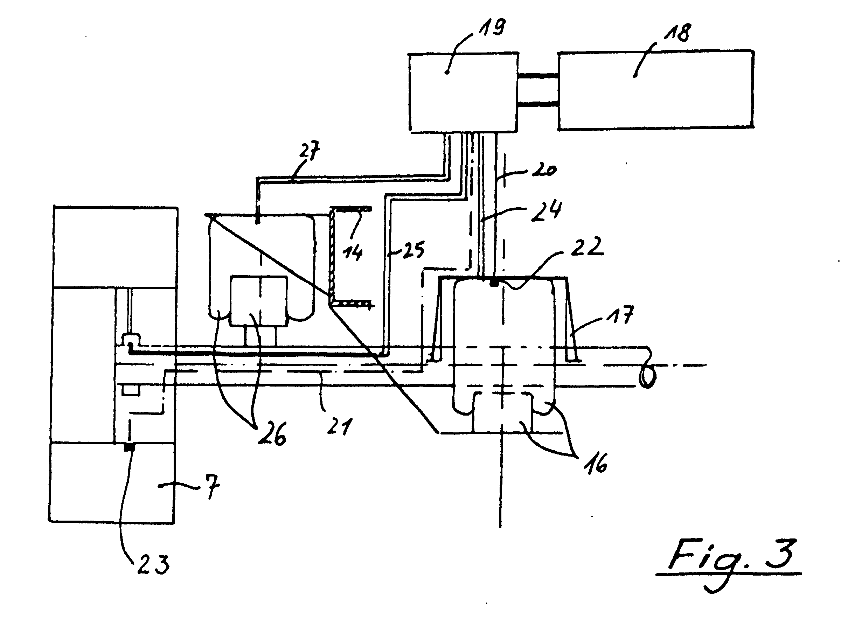

In Fig. 3 ist schematisch ein Blockschaltbild der für die Anhebung der Achse 5 (Fig. 2) notwendigen - hier nur prinzipiell erläuterten - Komponenten gezeigt. Eine Druckluftanlage 18 ist hierbei mit einer Steuer- und Regelungseinrichtung 19 versehen, welche über Steuer- und Regelungsleitungen 20, 21 über Sensoren 22, 23 mit den Luftfederbälgen 16 bzw. den Reifen 7 verbunden sind. Die Druckluftanlage 18 steht über Druckluftleitungen 24, 25 mit den Luftfederbälgen 16 und den Reifen 7 pneumatisch in Verbindung. Die Steuer- und Regelungseinrichtung 19 der gemeinsamen Druckluftanlage 18 kann dergestalt programmiert sein, dass der Reifen 7 der anhebbaren Achse 5 zunächst von dem Fahrbahnboden 3 abgehoben, anschließend druckentleert und abschließend mittels der Luftfederbälge 16 der Achsliftanlage gegen die Unterseite 2 der Aufbauten 1 gedrückt wird. In umgekehrter Reihenfolge kann der drucklose Reifen 7 zunächst von der Aufbauunterseite 2 abgehoben und anschließend über die Druckluftanlage 18 wieder auf Nenndruck gebracht werden. Abschließend können die Komponenten der Achsliftanlage die Reifen 7 der Achse 5 wieder auf den Fahrbahnboden 3 aufsetzen und in Arbeitsposition bringen. Um verkürzte Reaktionszeiten an der Reifendruckregelanlage und der Achsliftanlage zu erzielen, können hier nicht näher ausgeführte Ventile großer Querschnitte vorgesehen sein.

Bedarfsweise kann die Steuer- und Regelungseinrichtung 19 der gemeinsamen Druckluftanlage 18 in alternativer Weise programmiert sein, so dass beispielsweise erst nach oder während der Anhebung der Reifen 7, oder bei Anpressung der Reifen 7 an die Unterseite 2, deren Druckluftentleerung eingeleitet wird. Entsprechende druck- oder wegeabhängige, zusätzliche Sensoren können mit der gemeinsamen Steuer- und Regelungseinrichtung 19 zusammenwirken, um wunschgemäße Abstimmungen zwischen den Vorgängen der Entlüftung, Befüllung, Anhebung und Absenkung der Reifen erzielen zu können.

## Patentansprüche

1. Mehrachsige Nutzfahrzeuge mit Aufbauten (1) und mit wenigstens einer anhebbaren Achse (5), **dadurch gekennzeichnet, dass** eine zur Anhebung wenigstens einer anhebbaren Achse (5) vorgesehene Achsliftanlage zwecks Maximalisierung des Abstandes (h₂, 12) zwischen der Unterseite eines mit dieser Achse (5) mitangehobenen Reifens (7, 7/1) und dem Fahrbahnboden (3) solcherart mit einer Reifendruckregelanlage zusammenwirkt, dass zumindest eine teilweise Druckluftentleerung und eine Anpressung der anhebbaren Reifen (7, 7/1) um einen Betrag eines zusätzlichen Liftweges (10) mittelbar oder unmittelbar gegen eine Unterseite (2) der Aufbauten (1) realisiert sowie Bedarfsweise eine komplette Wiederbefüllung und Absenkung der Reifen (7, 7/1) in ihre ursprüngliche Wirkstellung ermöglicht ist.

2. Nutzfahrzeuge nach Anspruch 1, **dadurch gekennzeichnet, dass** die anhebbaren Reifen (7, 7/1) der wenigstens einen anhebbaren Achse (5) um den Betrag einer Seitenwandhöhe (h_{w}) der Reifen (7, 7/1) als zusätzlichem Liftweg (10) anhebbar sind.

3. Nutzfahrzeuge nach einem der Ansprüche 1 und 2, **dadurch gekennzeichnet, dass** die Komponenten der Reifendruckregelanlage derart mit den Komponenten der Achsliftanlage zusammenwirken, dass spätestens zu Beginn des Liftvorganges der anhebbaren Achse (5) die dazugehörigen Reifen (7, 7/1) zunächst entlüftet, anschließend die Achse (5) geliftet und abschließend die Reifen (7, 7/1) gegen eine Unterseite (2) der Aufbauten (1) gedrückt sind.

4. Nutzfahrzeuge nach einem der Ansprüche 1 bis 3, **dadurch gekennzeichnet, dass** für die Reifendruckregelanlage und die Achsliftanlage Ventile großer Querschnitte vorgesehen sind.

5. Nutzfahrzeuge nach einem der Ansprüche 1 bis 4, **dadurch gekennzeichnet, dass** die Reifendruckregelanlage und die Achsliftanlage eine gemeinsame Druckluftanlage (18) aufweisen, welche über eine gemeinsame Steuer- und Regelungseinrichtung (19) verfügt.

## Claims

1. Multi-axle commercial vehicles with superstructures (1) and with at least one liftable axle (5), **characterised in that** for maximising the distance (h2, 12) between the underside of a tyre (7, 7/1) raised together with this axle (5) and the ground (3) an axle lifting system provided for lifting at least one liftable axle (5) acts together with a tyre inflation system in such a way that the air pressure in the liftable tyres (7, 7/1) is at least partially decreased and that said tyres (7, 7/1) are pressed directly or indirectly against an underside (2) of the superstructures (1) by an amount of an additional lifting travel (10) and that the tyres (7, 7/1) can be completely refilled and lowered to their original effective position as required.

2. Commercial vehicles as per Claim 1, **characterised in that** the liftable tyres (7, 7/1) of the at least one liftable axle (5) can be lifted by the amount of a side wall height (h_{w}) of the tyres (7, 7/1) as an additional lifting travel (10).

3. Commercial vehicles according to one of the Claims 1 and 2, **characterised in that** components of the tyre inflation system act together with the components of the axle lifting system in such a way that not later than when the lifting action of the liftable axle (5) commences the associated tyres (7, 7/1) are bled first, then the axle (5) is lifted and finally the tyres (7, 7/1) are pressed against an underside (2) of the superstructures (1).

4. Commercial vehicles according to one of the Claims 1 to 3, **characterised in that** valves with large cross-sections are provided for the tyre inflation system and the axle lifting system.

5. Commercial vehicles according to one of the Claims 1 to 4, **characterised in that** the tyre inflation system and the axle lifting system feature a common compressed-air system (18) equipped with a common control and regulating system (19).

## Revendications

1. Véhicules industriels à plusieurs essieux avec superstructures (1) et avec au moins un essieu relevable (5), **caractérisés en ce qu'**un dispositif de relevage d'essieu prévu pour le relevage d'au moins un essieu relevable (5) est couplé à un système de régulation de la pression des pneus dans le but de maximiser la distance (h₂, 12) entre la partie inférieure d'un pneu (7, 7/1) relevé avec cet essieu (5) et la chaussée (3) de telle manière qu'au moins un dégonflage partiel et une pression des pneus relevables (7, 7/1) soient réalisés directement ou indirectement contre la partie inférieure (2) des superstructures (1) d'une valeur d'une hauteur de course de relevage supplémentaire (10) et que, si besoin est, un regonflage et un abaissement des pneus (7, 7/1) soit possible dans leur état d'origine.

2. Véhicules industriels selon la revendication 1, **caractérisés en ce que** les pneus relevables (7, 7/1) d'au moins un essieu relevable (5) sont relevables d'une hauteur de flanc (h_{w}) des pneus (7, 7/1) en tant que course de relevage supplémentaire (10).

3. Véhicules industriels selon les revendications 1 et 2, **caractérisés en ce que** les composants du dispositif de régulation de la pression des pneus sont couplés aux composants du dispositif de relevage d'essieu de telle manière qu'au plus tard au commencement du relevage de l'essieu relevable (5), les pneus (7, 7/1) de cet essieu sont tout d'abord dégonflés, puis l'essieu (5) est relevé et, pour finir, les pneus (7, 7/1) sont pressés contre une partie inférieure (2) des superstructures (1).

4. Véhicules industriels selon l'une des revendications 1 à 3, **caractérisés en ce que** des valves de grande section transversale sont prévues pour le dispositif de régulation de la pression des pneus et du dispositif de relevage d'essieu.

5. Véhicules industriels selon l'une des revendications 1 à 4, **caractérisés en ce que** le dispositif de régulation de la pression des pneus et le dispositif de relevage d'essieu présentent un circuit pneumatique (18) commun, lequel dispose d'un dispositif de commande et de régulation (19) commun.
